# EUROPEAN PATENT APPLICATION

(11) **EP 4 752 975 A1**
(43) Date of publication of application: **03.06.2026**
(21) Application number: 25219261.2
(22) Date of filing: 28.11.2025
(51) Int. Cl.: H01M 4/525, H01M 4/58, H01M 4/36

(54) **POSITIVE ELECTRODES AND RECHARGEABLE LITHIUM BATTERIES INCLUDING THE SAME**

(30) Priority: 02.12.2024 KR 20240176685
(71) Applicant: SAMSUNG SDI CO., LTD., Yongin-si, Gyeonggi-do 17084 (KR)
(72) Inventor: NAM, Sanghee, 17084 Yongin-si, Gyeonggi-do (KR); OH, Songyul, 17084 Yongin-si, Gyeonggi-do (KR); SUH, Soonsung, 17084 Yongin-si, Gyeonggi-do (KR); KIM, Sangmi, 17084 Yongin-si, Gyeonggi-do (KR)
(74) Representative: Michalski Hüttermann & Partner Patentanwälte mbB

(57) **Abstract**

Disclosed are a positive electrode, and a rechargeable lithium battery including the positive electrode. The positive electrode includes a current collector, and a positive electrode active material layer on the current collector. The positive electrode active material layer includes a positive electrode active material including a lithium transition metal composite compound, and an irreversible positive electrode additive including at least one of a lithium iron-based oxide, a lithium cobalt-based oxide, and a lithium nickel-based oxide.

## Description

### BACKGROUND

### 1. Field

Positive electrodes, and rechargeable lithium batteries including the positive electrodes are disclosed.

### 2. Description of the Related Art

A portable information device such as, e.g., a cell phone, a laptop, smart phone, and the like, or an electric vehicle has used a rechargeable lithium battery having high energy density and ready portability as a driving power source. Research is conducted to use a rechargeable lithium battery with high energy density as a driving power source or power storage power source for, e.g., hybrid or electric vehicles.

Various positive electrodes are investigated to implement rechargeable lithium batteries suitable for the above applications. Due to increasing demand for large-sized, high-capacity, or high-energy-density rechargeable lithium batteries, developing a positive electrode that increases capacity while ensuring stability, has high plate density, and improved capacity per volume, may be advantageous.

### SUMMARY

Example embodiments include a positive electrode capable of realizing high density, high capacity, high efficiency, long cycle-life characteristics and high energy density, and a rechargeable lithium battery including the positive electrode.

In some example embodiments, a positive electrode includes a current collector, and a positive electrode active material layer on the current collector. The positive electrode active material layer includes a positive electrode active material including a lithium transition metal composite compound, and an irreversible positive electrode additive including at least one of a lithium iron-based oxide, a lithium cobalt-based oxide, and a lithium nickel-based oxide.

In some example embodiments, a rechargeable lithium battery includes the positive electrode, a negative electrode, and an electrolyte.

According to some example embodiments, the positive electrode improves or maximizes capacity while reducing or minimizing production cost, and ensures charge/discharge efficiency characteristics and long cycle-life characteristics. The rechargeable lithium battery including the positive electrode may exhibit high initial charge/discharge capacity and efficiency while ensuring safety and heat resistance, and can implement long cycle-life characteristics.

### BRIEF DESCRIPTION OF THE DRAWINGS

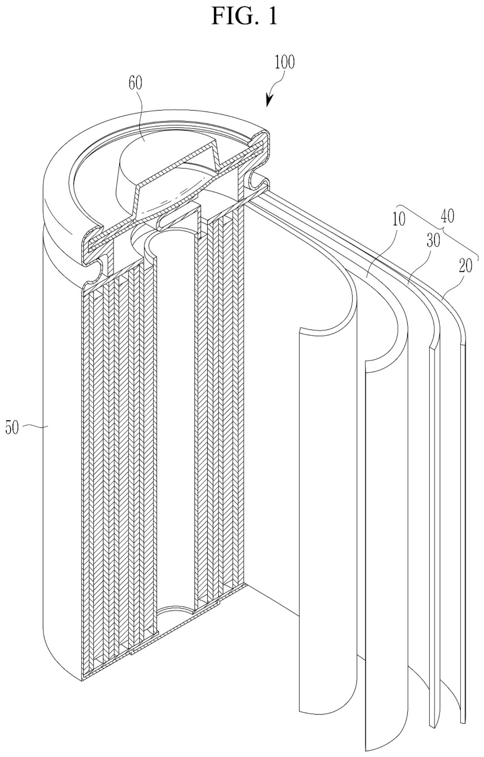

FIGS. 1 to 4 are views schematically illustrating a rechargeable lithium battery according to some example embodiments.

### DETAILED DESCRIPTION

Hereinafter, example embodiments are described in detail so that those of ordinary skill in the art can readily implement the example embodiments. However, this disclosure may be embodied in many different forms and should not be construed to be limited to the example embodiments set forth herein.

The terminology used herein is used to describe example embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, and the like, are exaggerated for clarity, and like reference numerals designate like elements throughout the specification. It is understood that when an element such as a layer, film, region, or substrate is referred to as being "on" another element, the element can be directly on the other element, or intervening elements may also be present therebetween. In contrast, when an element is referred to as being "directly on" another element, no intervening elements may be present.

"Layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating the average particle diameter value based on the above measurements. Unless otherwise defined, the average particle diameter may mean the diameter (D₅₀) of particles having a cumulative volume of 50 volume% in the particle size distribution. As used herein, when a definition is not otherwise provided, the average particle diameter means a diameter (D₅₀) of particles having a cumulative volume of 50 volume% in the particle size distribution that is obtained by measuring the size (diameter or major axis length) of about 20 particles at random in a scanning electron microscope image.

"Or" is not to be construed as an exclusive meaning, for example, "A or B" is construed to include A, B, A+B, and the like.

"Metal" is interpreted as a concept including ordinary metals, transition metals and metalloids (semi-metals).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Positive Electrode

In some example embodiments, a positive electrode includes a current collector, and a positive electrode active material layer on the current collector. The positive electrode active material layer includes a positive electrode active material including a lithium transition metal composite compound, and an irreversible positive electrode additive including at least one of a lithium iron-based oxide, a lithium cobalt-based oxide, and a lithium nickel-based oxide.

To improve cycle-life of rechargeable lithium batteries, methods for rapid negative electrode activation and high undischarged capacity induction by reversible lithium content increase are studied. That is, a pre-lithiation method that intercalates reversible lithium into the negative electrode in advance has been studied, but commercialization may be challenging due to the existence of additional process steps and uneven pre-lithiation. Accordingly, the cycle-life characteristics of rechargeable lithium batteries are improved by inducing pre-lithiation during combustion without additional processes and equipment through an irreversible positive electrode additive, thereby increasing the reversible lithium content and undischarged capacity.

### Positive Electrode Active Material

The positive electrode active material may include a lithium transition metal composite oxide, and examples of the lithium transition metal composite oxide may include at least one of a lithium nickel-based oxide, a lithium cobalt-based oxide, a lithium manganese-based oxide, a lithium iron phosphate-based compound, a cobalt-free lithium nickel-manganese-based oxide, a lithium-**manganese-rich** compound, or a combination thereof.

As an example, a compound represented by any of the following chemical formulas may be used. LiₐA_{1-b}X_{b}O_{2-c}D_{c} (0.90≤a≤ 1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤ 1.8, 0≤b≤0.5, 0≤c≤0.5, 0< α<2); LiₐNi_{b}Co_{c}L¹_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may include, for example, at least one of a lithium nickel-based oxide represented by Chemical Formula 11, a lithium cobalt-based oxide represented by Chemical Formula 12, a lithium iron phosphate-based compound represented by Chemical Formula 13 or Chemical Formula 14, a cobalt-free lithium nickel-manganese-based oxide represented by **Chemical** Formula 15, or a combination thereof.

Chemical Formula 11: Liₐ₁₁Niₓ₁₁M¹¹_{y11}M¹²_{z11}O_{2-b11}X_{b11}.

In Chemical Formula 11, 0.9≤a11≤1.8, 0.3≤x11≤1, 0≤y11≤0.7, 0≤z11≤0.7, 0.9≤x11+y11+z11 ≤1.1, and 0≤b11 ≤0.1, M¹¹ and M¹² each independently is or includes at least one or more of Al, B, Ba, Ca, Ce, Co, Cr, Cu, Fe, Mg, Mn, Mo, Nb, Si, Sn, Sr, Ti, V, W, **Y,** and Zr, and X is or includes at least one or more of F, P, and S. M¹¹ and M¹² may be different elements.

In Chemical Formula 11, 0.6≤x11≤1, 0≤y11≤0.4, and 0≤z11 ≤0.4, or 0.8≤x11≤1, 0≤y11≤0.2, and 0≤z11≤0.2.

Chemical Formula 12: Liₐ₁₂Coₓ₁₂M¹³_{y12}O_{2-b12}X_{b12}.

In Chemical Formula 12, 0.9≤a12≤1.8, 0.7≤x12≤1, 0≤y12≤0.3, 0.9≤x12+y12≤1.1, and 0≤b12≤0.1, M¹³ is or includes at least one or more of Al, B, Ba, Ca, Ce, Cr, Cu, Fe, Mg, Mn, Mo, Ni, Se, Si, Sn, Sr, Ti, V, W, **Y,** Zn and Zr, and X is or includes at least one or more of F, P, and S.

Chemical Formula 13: Liₐ₁₃Fe₍₁₋ₓ₁₃₎M¹⁴ₓ₁₃PO₄.

In Chemical Formula 13, 0.90≤a13≤1.5, and 0≤x13≤0.4, and M¹⁴ may be or include at least one of Al, B, Ca, Ce, Cr, Cu, La, Mg, Mn, Mo, Nb, Ni, Si, Sn, Sr, Ti, V, W, Y, Zn, Zr, or a combination thereof. Herein, 0.90≤a13≤1.5, or for example, 0.90≤a13≤1.2, or 0.95≤a13≤1.1. Additionally, 0≤x13≤0.4, **0≤x13≤0.3, 0≤x13≤0.2, 0≤x13≤0.1,** or 0≤x13≤0.05.

Chemical Formula 14: Liₐ₁₄Mnx₁₄Fe_{(1-x14-y14)}M¹⁵y₁₄PO₄.

In Chemical Formula 14, 0.90≤a14≤1.5, 0.1≤x14≤0.9, and 0≤y14≤0.9, and M¹⁵ is or includes at least one of Al, B, Ca, Ce, Cr, Cu, La, Mg, Mo, Nb, Ni, Si, Sn, Sr, Ti, V, W, Y, Zn, Zr, or a combination thereof. Herein, 0.90≤a14≤1.5, or for example, 0.90≤a14≤1.2, or 0.95≤a14≤1.1. Additionally, 0.1≤x14≤0.9, 0.3≤x14≤0.9, or 0.4≤x14≤0.8, and 0≤y14≤0.4, 0≤y14≤0.3, 0≤y14≤0.2, 0≤y14≤0.1, or 0≤y14≤0.05.

Chemical Formula 15: Liₐ₁₅Niₓ₁₅Mn_{y15}M¹⁶_{z15}O_{2-b15}X_{b15}.

In Chemical Formula 15, 0.9≤a15≤1.8, 0.8≤x15<1, 0<y15≤0.2, 0≤z15≤0.2, 0.9≤x15+y15+z15≤1.1, and 0≤b15≤0.1, M¹⁶ is or includes at least one of Al, B, Ba, Ca, Ce, Cr, Fe, Mg, Mo, Nb, Si, Sn, Sr, Ti, V, W, Y, and Zr, and X is or includes at least one or more of F, P, and S.

For example, the positive electrode active material may include lithium iron phosphate-based compound, and the lithium iron phosphate-based compound may contribute to improving heat resistance and thermal stability, while also increasing capacity or increasing output. For example, the lithium iron phosphate-based compound may be represented by Chemical Formula 13 or Chemical Formula 14. For example, M¹⁴ and M¹⁵ of Chemical Formula 13 and Chemical Formula 14 may each independently include at least one of Al, Mg, Ti, V, or a combination thereof.

For example, the lithium iron phosphate-based compound may include at least one of LiFePO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, or a combination thereof.

The positive electrode active material including the lithium iron phosphate-based compound is in the form of particles, and the average particle diameter (D₅₀) of the particles may be in a range of ≥ 0.01 µm to ≤ 2 µm, for example, ≥ 0.1 µm to ≤ 1 µm, or ≥ 0.2 µm to ≤ 0.9 µm. Herein, the average particle diameter (D₅₀) may be obtained by randomly measuring the size (diameter or major axis length) of ≥ 20 particles from a scanning electron microscope image of the positive electrode active materials to obtain a particle size distribution, and taking the diameter of the particles having a cumulative volume of 50 volume% from the particle size distribution as the average particle diameter.

In some example embodiments, the lithium iron phosphate-based compound may be in the form of secondary particles formed by agglomerating a plurality of primary particles, single particles, or a mixture of secondary particles and single particles.

The lithium iron phosphate-based compound may be or include secondary particles formed by agglomerating a plurality of primary particles. The secondary particles may be expressed as an assembly. The secondary particles may have a spherical or ellipsoidal shape as the primary particles are closely agglomerated with each other. The average particle diameter (D₅₀) of **the secondary** particles may be, for example, in a range of ≥ 5 µm to ≤ 20 µm, ≥ 6 µm to ≤ 20 µm, or ≥ 6 µm to ≤ 15 µm. The average particle diameter (D₅₀) of the secondary particles may be larger than the average particle diameter (D₅₀) of the single particles described below. The average particle diameter (D₅₀) of the primary particles forming the secondary particles may be, for example, in a range of ≥ 0.1 µm to ≤ 2 µm, ≥ 0.1 µm to ≤ 1.2 µm, or ≥ 0.5 µm to ≤ 0.9 µm, and for example, ≥ in a range of 10 nm to ≤ 400 nm, ≥ 20 nm to ≤ 300 nm, or ≥ 50 nm to ≤ 200 nm. For example, the average particle diameter (D₅₀) of the secondary particles may be obtained by randomly selecting about 30 first particles from an electron microscope image of a lithium iron phosphate-based compound, measuring the particle diameter, and taking the diameter of the particles having a cumulative volume of 50 volume% from the particle size distribution as the average particle diameter. The average particle diameter (D₅₀) of the primary particles forming the secondary particles may be obtained by measuring the sizes of about 30 primary particles in an electron microscope image of the surface or cross-section of the first particle and taking the diameter of the particles having a cumulative volume of 50 volume% in the particle size distribution as the average particle diameter.

The secondary particles may include pores therein, and the void ratio may be in a range of ≥ 20% to ≤ 50%. The porosity may be obtained by measuring an area ratio of the portion occupied by the porosity within the secondary particles to the cross-sectional area of the secondary particles using an image analysis program such as Image J, for example, from a scanning electron microscope **image of** the cross-section of the secondary particles.

The lithium iron phosphate-based compound may have the form of a single particle. An average particle diameter (D₅₀) of the single particles may be less than or equal to ≤ 2 µm, for example, ≥ 0.5 µm to ≤ 2 µm, ≥ 0.5 µm to ≤ 1.5 µm, ≥ 0.6 µm to ≤ 1.2 µm, or ≥ 0.8 µm to ≤ 1.0 µm. The average particle diameter (D₅₀) of the single particles may be smaller than the average particle diameter (D₅₀) of the secondary particles, and may be equal to or larger than the average particle diameter (D₅₀) of the primary particles forming the secondary particles. The average particle diameter (D₅₀) of the single particles may be, for example, obtained by randomly selecting about 30 second particles from an electron microscope image of a lithium iron phosphate-based compound, measuring the particle diameters thereof, and taking the diameter of particles having a cumulative volume of 50 volume% from the particle size distribution as the average particle diameter.

Based on 100 wt% of the positive electrode active material including the lithium iron phosphate-based compound, an amount of the secondary particles may be in a range of ≥ 20 wt% to ≤ 90 wt% and an amount of the single particles may be in a range of ≥ 10 wt% to ≤ 80 wt%, for example, the amount of the secondary particles may be ≥ 40 wt% to ≤ 80 wt% and the amount of the single particles may be ≥ 20 wt% to ≤ 60 wt%, or the amount of the secondary particles may be ≥ 40 wt% to ≤ 60 wt% and the amount of the single particles may be ≥ 40 wt% to ≤ 60 wt%. When the mixing ratio of the secondary particles and the single particles satisfies the above range, the positive electrode including the secondary particles and the single particles may have improved energy density and realize high charge/discharge capacity and efficiency and cycle-life characteristics.

The lithium iron phosphate-based compound may further include a carbon coating layer on the particle surface. For example, the secondary particles may further include a carbon coating layer on the surface of the secondary particles and/or on the surface of the primary particles forming the secondary particle. For example, the secondary particles may further include a carbon coating layer on the surface of the secondary particle, may further include a carbon coating layer on the surface of the primary particles forming the secondary particle, and may further include a carbon coating layer on the surface of the secondary particles and the surface of the primary particles forming the secondary particles. Additionally, the single particles may further include a carbon coating layer on the surface of the single particle. The carbon coating layer may improve the electrical conductivity of the lithium iron phosphate-based compound and reduce the resistance of the positive electrode. The carbon coating layer may include amorphous carbon, crystalline carbon, or a combination thereof. The carbon coating layer may be formed using a carbon raw material including, for example, at least one of glucose, sucrose, lactose, starch, oligosaccharide, polyoligosaccharide, fructose, cellulose, a polymer of furfuryl alcohol, a block copolymer of ethylene and ethylene oxide, a vinyl resin, a cellulose resin, a phenol resin, a pitch resin, a tar resin, or a combination thereof. For example, the carbon coating layer may be formed by arranging the carbon raw materials on the surface of the lithium iron phosphate-based compound particles, and then performing a sintering process. For example, the carbon raw material and the primary particles including the lithium iron phosphate-based compound may be mixed and fired to form a carbon coating layer on the surfaces of the primary particles, and then secondary particles in which the primary particles are agglomerated may be prepared through a post-process, or the carbon raw material and the secondary particles may be mixed and fired to form a carbon coating layer on the surfaces of the secondary particles. Alternatively, the carbon raw material and the single particles including the lithium iron phosphate-based compound may be mixed and fired to form a carbon coating layer located on the surface of the single particles.

### Irreversible Positive Electrode Additive

The irreversible positive electrode additive includes at least one of a lithium iron-based oxide, a lithium cobalt-based oxide, and a lithium nickel-based oxide.

Some of the lithium contained in the positive electrode active material participates in the formation of a solid electrolyte interface (SEI) film during charge and discharge, and is converted to irreversible lithium that no longer participates in the charge and discharge reaction. This may cause capacity loss problems. Accordingly, the above-mentioned problem may be solved by using an irreversible positive electrode additive. According to the present invention an "irreversible positive electrode additive" is especially a compound that is capable of compensating for the generation of irreversible lithium, e.g., a compound that may be decomposed in the oxidation process to provide lithium and acts as a sacrificial positive electrode that does not participate in subsequent charge/discharge, in the positive electrode. According to some example embodiments, by using an irreversible positive electrode additive including all of lithium iron-based oxide, lithium cobalt-based oxide, and lithium nickel-based oxide, a large amount of lithium may be provided in the oxidation process due to their synergistic effects, compared to the case where no irreversible positive electrode additive is used or where one or more of lithium iron-based oxide, lithium cobalt-based oxide, and lithium nickel-based oxide are used, thereby compensating for the generation of a large amount of irreversible lithium and simultaneously or contemporaneously improving the capacity, efficiency, and cycle-life characteristics of the rechargeable lithium battery.

An amount of the irreversible positive electrode additive based on 100 wt% of the total positive electrode active material layer may be in a range of ≥ 0.5 wt% to ≤ 2.5 wt%, for example, ≥ 0.6 to ≤ 2.3 wt%, ≥ 0.7 to ≤ 2.1 wt%, or ≥ 0.8 to ≤ 2.0 wt%. When the irreversible positive electrode additive is used in the above amount range, the irreversible positive electrode additive can play a sufficient role of compensating for the generation of irreversible lithium, thus increasing the utilization rate of the positive electrode active material, and improving the charge/discharge efficiency without reducing the capacity of the positive electrode.

The lithium iron-based oxide may be or include at least one of Li₅FeO₄, LiFeO₂, LiFe₅O₈, or a combination thereof, and among the above oxides, using **Li₅FeO₄** may provide a large amount of lithium in the formation process, which may substantially compensate for the generation of irreversible lithium, and thus substantially obtain the effect of the irreversible positive electrode additive.

An average particle diameter (D₅₀) of the lithium iron-based oxide may be in a range of ≥ 0.5 µm to ≤ 20 µm, for example, ≥ 0.5 µm to ≤ 10 µm, ≥ 0.5 µm to ≤ 5 µm, or ≥ 0.5 µm to ≤ 3 µm. When the average particle diameter of the lithium iron-based oxide is within the above range, the density of the positive electrode active material layer may be improved during the positive electrode manufacturing process, and a large amount of lithium may be provided in the formation process, thereby compensating for the generation of a large amount of irreversible lithium.

An amount of the lithium iron-based oxide based on 100 wt% of the total positive electrode active material layer may be in a range of ≥ 0.1 wt% to ≤ 1.5 wt%, for example, ≥ 0.2 wt% to ≤ 1.0 wt%, or ≥ 0.3 wt% to ≤ 0.8 wt%. When the amount of the lithium iron-based oxide is within the above range, a large amount of lithium may be provided in the formation process, which may substantially compensate for the generation of irreversible lithium, and simultaneously or contemporaneously improve the capacity and cycle-life characteristics of the rechargeable lithium battery.

The lithium cobalt-based oxide may be or include LiₒCoO₄, and the use of Li₆CoO₄ may provide a large amount of lithium in the formation process, which can substantially compensate for the generation of irreversible lithium, and thus substantially obtain the effect of the irreversible positive electrode additive.

An average particle diameter (D₅₀) of the lithium cobalt-based oxide may be in a range of ≥ 0.5 µm to ≤ 20 µm, for example, ≥ 0.5 µm to ≤ 10 µm, ≥ 0.5 µm to ≤ 5 µm, or ≥ 0.5 µm to ≤ 3 µm. When the average particle diameter of the lithium cobalt-based oxide is within the above range, the density of the positive electrode active material layer may be improved during the positive electrode manufacturing process, and a large amount of lithium may be provided in the formation process, thereby compensating for the generation of a large amount of irreversible lithium.

An amount of the lithium cobalt-based oxide based on 100 wt% of the total positive electrode active material layer may be in a range of ≥ 0.1 wt% to ≤ 1.5 wt%, for example, ≥ 0.2 wt% to ≤ 1.0 wt%, or ≥ 0.3 wt% to ≤ 0.8 wt%. When the amount of the lithium cobalt-based oxide is within the above range, a large amount of lithium may be provided in the formation process, which may substantially compensate for the generation of irreversible lithium, and simultaneously or contemporaneously improve the capacity and cycle-life characteristics of the rechargeable lithium battery.

The lithium nickel-based oxide may be or include Li₂NiO₂, and the use of Li₂NiO₂ may provide a large amount of lithium in the formation process, which may consequently compensate for the generation of a large amount of irreversible lithium, and thus substantially obtain the effect of the irreversible positive electrode additive.

An average particle diameter (D₅₀) of the lithium nickel-based oxide may be in a range of ≥ 0.5 µm to ≤ 20 µm, for example, ≥ 0.5 µm to ≤ 10 µm, ≥ 0.5 µm to ≤ 5 µm, or ≥ 0.5 µm to ≤ 3 µm. When the average particle diameter of the lithium nickel-based oxide is within the above range, the density of the positive electrode active material layer may be improved during the positive electrode manufacturing process, and a large amount of lithium may be provided in the formation process, thereby compensating for the generation of a large amount of irreversible lithium.

An amount of the lithium nickel-based oxide based on 100 wt% of the total positive electrode active material layer may be in a range of ≥ 0.1 wt% to ≤ 1.5 wt%, for example, ≥ 0.2 wt% to ≤ 1.0 wt%, or ≥ 0.3 wt% to ≤ 0.8 wt%. When the amount of the lithium nickel-based oxide is within the above range, a large amount of lithium may be provided in the formation process, which may substantially compensate for the generation of irreversible lithium, and simultaneously or contemporaneously improve the capacity and cycle-life characteristics of the rechargeable lithium battery.

The positive electrode active material layer may further include other types of positive electrode active materials in addition to the aforementioned positive electrode active material and irreversible positive electrode additive. Additionally, the positive electrode active material layer may optionally further include at least one of a binder, a conductive material, or a combination thereof.

### Binder

The binder adheres the positive electrode active material particles to each other, and adheres the positive electrode active material to the current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto

### Conductive Material

A conductive material may provide conductivity to an electrode, and in the battery being constructed, any electronically conductive material can be used as long as the electronically conductive material does not cause an adverse chemical change to the battery. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

Amounts of the binder and the conductive agent may be in a range of ≥ 0.5 wt% to ≤ 5 wt%, respectively, based on 100 wt% of the positive electrode active material layer.

The positive electrode current collector may be or include an Al thin film, but is not limited thereto.

In some example embodiments, a loading level of the positive electrode active material layer may be in a range of ≥ 10 mg/cm² to ≤ 60 mg/cm², for example ≥ 10 mg/cm² to ≤ 30 mg/cm² or ≥ 10 mg/cm² to ≤ 20 mg/cm². Additionally, the density of the positive electrode active material layer in the compressed final positive electrode may be in a range of ≥ 2.0 g/cc to ≤ 3.0 g/cc, for example ≥ 2.1 g/cc to ≤ 2.8 g/cc or ≥ 2.2 g/cc to ≤ 2.6 g/cc. When applying a positive electrode active material according to some example embodiments, it may be advantageous to implement the above loading level and positive electrode active material layer density, and a positive electrode satisfying the loading level and the density of the positive electrode active material layer in the above range may be suitable for implementing a high-capacity, high-energy-density rechargeable lithium battery.

A thickness of the positive electrode active material layer may be in a range of ≥ 40 µm to ≤ 300 µm, for example, ≥ 50 µm to ≤ 250 µm, or ≥ 80 µm to ≤ 200 µm. When the thickness of the positive electrode active material layer satisfies the above range, a high-capacity and high-energy density battery may be realized.

### Rechargeable Lithium Battery

In one example embodiment, a rechargeable lithium battery is provided including the aforementioned positive electrode, a negative electrode, and an electrolyte. For example, a rechargeable lithium battery may include a positive electrode, a negative electrode, a separator between the positive electrode and the negative electrode, and an electrolyte.

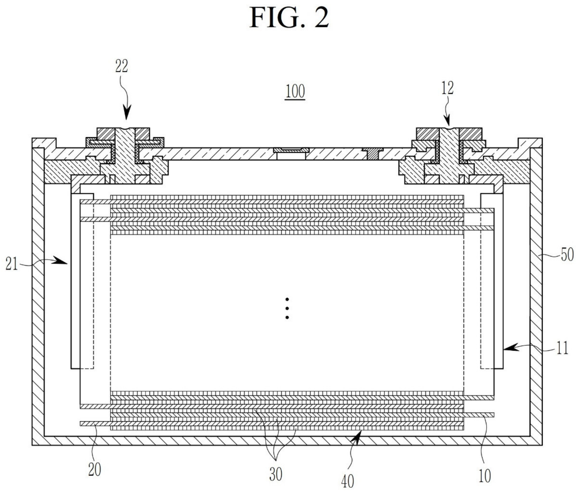

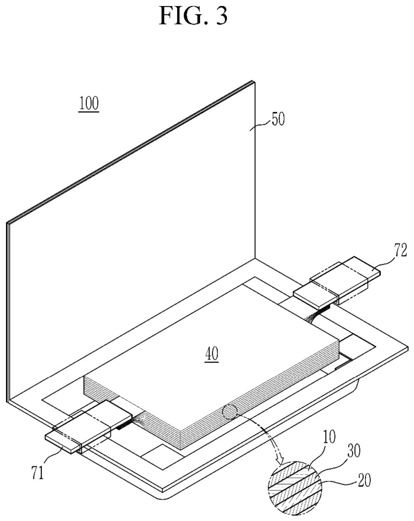

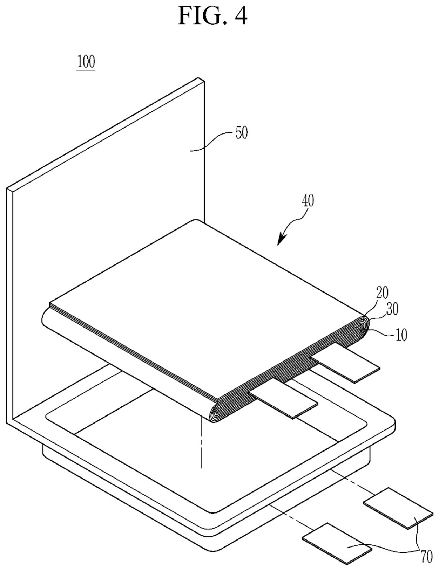

The rechargeable lithium battery may be classified into cylindrical, prismatic, pouch, or coin-type batteries, and the like depending on the shape thereof. FIGS. 1 to 4 are schematic views showing the rechargeable lithium battery according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current formed in the electrode assembly 40 to the outside of the battery 100.

For example, the rechargeable lithium battery may apply a positive electrode active material and an irreversible positive electrode additive according to some example embodiments to the positive electrode, and activate the irreversible positive electrode additive by initially charging in a voltage range of ≥ 2.5 V to ≤ 4.2 V at ≥ 0.05 to ≤ 0.33 C-rate. Thereby, the formation process may substantially compensate for the generation of irreversible lithium, and simultaneously or contemporaneously improve the capacity and cycle-life characteristics of the rechargeable lithium battery.

### Negative Electrode

The negative electrode may include a current collector, and a negative electrode active material layer on the current collector, and the negative electrode active material layer includes a negative electrode active material and may further include a binder, a conductive material, or a combination thereof.

### Negative Electrode Active Material

The negative electrode active material may be or include at least one of a material capable of reversibly intercalating/deintercalating lithium ions, lithium metal, lithium metal alloy, a material capable of doping/dedoping lithium, or a transition metal oxide.

The material capable of reversibly intercalating/deintercalating lithium ions may be or include a carbon-based negative electrode active material, for example crystalline carbon, amorphous carbon, or a combination thereof. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOₓ (0<x≤2), a Si-Q alloy (wherein Q is an element such as or including at least one of an alkali metal, an alkaline-earth metal, a Group 13 element, a Group 14 element (excluding Si), a Group 15 element, a Group 16 element, a transition metal, a rare earth element, and a combination thereof, for example at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be or include at least one of Sn, SnO₂, a Sn alloy, or a combination thereof.

The silicon-carbon composite may be or include a composite of silicon and amorphous carbon. An average particle diameter (D₅₀) of the silicon-carbon composite particles may be, for example, in a range of ≥ 0.5 µm to ≤ 20 µm. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles. For example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core. The crystalline carbon may be or include artificial graphite, natural graphite, or a combination thereof. The amorphous carbon may include at least one of soft carbon or hard carbon, a mesophase pitch carbonized product, and calcined coke.

When the silicon-carbon composite includes silicon and amorphous carbon, a content of silicon may be in a range of ≥ 10 wt% to ≤ 50 wt% and an amount of amorphous carbon may be in a range of ≥ 50 wt% to ≤ 90 wt% based on 100 wt% of the silicon-carbon composite. In addition, when the composite includes silicon, amorphous carbon, and crystalline carbon, a content of silicon may be in a range of ≥ 10 wt% to ≤ 50 wt%, an amount of crystalline carbon may be in a range of ≥ 10 wt% to ≤ 70 wt%, and an amount of amorphous carbon may be in a range of ≥ 20 wt% to ≤ 40 wt% based on 100 wt% of the silicon-carbon composite.

Additionally, a thickness of the amorphous carbon coating layer may be in a range of ≥ 5 nm to ≤ 100 nm. An average particle diameter (D₅₀) of the silicon particles (primary particles) may be in a range of ≥ 10 nm to ≤ 1 µm, or ≥ 10 nm to ≤ 200 nm. The silicon particles may exist as silicon alone, in the form **of a silicon** alloy, or in an oxidized form. The oxidized form of silicon may be represented by SiOₓ (0<x≤2). For example, the atomic content ratio of Si:O, which indicates a degree of oxidation, may be in a range of ≥ 99:1 to ≤ 33:67. As used herein, when a definition is not otherwise provided, an average particle diameter (D₅₀) indicates a particle where a cumulative volume is about 50 volume% in a particle size distribution.

The Si-based negative electrode active material or Sn-based negative electrode active material may be mixed with the carbon-based negative electrode active material. When the Si-based negative electrode active material or the Sn-based negative electrode active material and the carbon-based negative electrode active material are mixed, the mixing ratio may be a weight ratio in a range of ≥ 1:99 to ≤ 90:10.

### Binder

The binder adheres the negative electrode active material particles to each other, and adheres the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity, and any electrically conductive material may be used as a conductive material unless the electrically conductive material causes an adverse chemical change in the battery. Examples of the conductive material include a carbon-based material such as or including at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

An amount of the negative electrode active material may be in a range of ≥ 95 wt% to ≤ 99.5 wt% based on 100 wt% of the negative electrode active material layer, and an amount of the binder may be in a range of ≥ 0.5 wt% to ≤ 5 wt% based on 100 wt% of the negative electrode active material layer. For example, the negative electrode active material layer may include ≥ 90 wt% to ≤ 99 wt% of the negative electrode active material, ≥ 0.5 wt% to ≤ 5 wt% of the binder, and ≥ 0.5 wt% to ≤ 5 wt% of the conductive material.

### Current Collector

The current collector may include, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li) or an alloy thereof, and may be in the form of a foil, sheet, or foam. A thickness of the entire collector may be, for example, in a range of ≥ 1 µm to ≤ 20 µm, ≥ 5 µm to ≤ 15 µm, or ≥ 7 µm to ≤ 10 µm.

### Electrolyte

The electrolyte for the rechargeable lithium battery may be or include an electrolyte solution, which may include a non-aqueous organic solvent and a lithium salt.

The non-aqueous organic solvent constitutes a medium for transmitting ions taking part in the electrochemical reaction of a battery. The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent can be used alone, or in a mixture of two or more types of solvents, and when two or more types of solvents are used in a mixture, a mixing ratio may be appropriately adjusted according to the desired battery performance, which is typically known to those working in the field.

When using a carbonate-based solvent, a cyclic carbonate and a chain carbonate may be mixed, and the cyclic carbonate and the chain carbonate may be mixed in a volume ratio in a range of ≥ 1:1 to ≤ 1:9.

The non-aqueous organic solvent may further include an aromatic hydrocarbon-based organic solvent. For example, a carbonate-based solvent and an aromatic hydrocarbon-based organic solvent may be mixed in a volume ratio in a range of ≥ 1:1 to ≤ 30:1.

The electrolyte solution may further include at least one of vinylethyl carbonate, vinylene carbonate, or an ethylene carbonate-based compound to improve battery cycle-life.

Examples of the ethylene carbonate-based compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent may supply lithium ions in a battery, may enable an operation of a rechargeable lithium battery, and may improve transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of ≥ 0.1 M to ≤ 2.0 M. When the concentration of lithium salt is within the above range, the electrolyte solution has appropriate ionic conductivity and viscosity, and thus desired or improved performance can be achieved and lithium ions can move effectively.

### Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof, on one surface, or on both surfaces, of the porous substrate.

The porous substrate may be or include a polymer film formed of or including any one polymer such as or including at least one of polyolefin such as polyethylene and polypropylene, polyester such as polyethylene terephthalate and polybutylene terephthalate, polyacetal, polyamide, polyimide, polycarbonate, **polyether** ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The porous substrate may have a thickness in a range of ≥ 1 µm to ≤ 40 µm, for example, ≥ 1 µm to ≤ 30 µm, ≥ 1 µm to ≤ 20 µm, ≥ 5 µm to ≤ 15 µm, or ≥ 10 µm to ≤ 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be in a range of ≥ 1 nm to ≤ 2000 nm, for example, ≥ 100 nm to ≤ 1000 nm, or ≥ 100 nm to ≤ 700 nm.

The organic material and the inorganic material may be mixed in one coating layer, or a coating layer including an organic material and a coating layer including an inorganic material may be stacked together.

The thickness of the coating layer may be in a range of ≥ 0.5 µm to ≤ 20 µm, for example, ≥ 1 µm to ≤ 10 µm, or ≥ 1 µm to ≤ 5 µm.

Examples and comparative examples of the present disclosure are described below. However, the following examples are only examples of the present disclosure, and the present disclosure is not limited to the following examples.

### Example 1

93.49 wt% of LiFePO₄ as a positive electrode active material, 3.0 wt% of a polyvinylidene fluoride binder, 1.6 wt% of a carbon nanotube conductive material, and 0.64 wt% of Li₅FeO₄, 0.64 wt% of Li₆CoO₄, and 0.63 wt% of Li₂NiO₂ as irreversible positive electrode additives were mixed in an NMP solvent to prepare a positive electrode active material layer slurry, which was coated on an aluminum foil current collector, and then dried and compressed to manufacture a positive electrode.

The positive electrode was used with a lithium metal counter electrode as a negative electrode, a polytetrafluoroethylene separator, and an electrolyte solution prepared by dissolving 1 M LiPF₆ in a mixed solvent of ethylene carbonate and dimethyl carbonate in a volume ratio of 3:7 to manufacture a rechargeable lithium battery cell in a common method.

### Example 2

A positive electrode and a rechargeable lithium battery cell were manufactured in the same manner as Example 1, with a difference that 94.45 wt% of LiFePO₄, 3.0 wt% of the polyvinylidene fluoride binder, 1.6 wt% of the carbon nanotube conductive material, and 0.32 wt% of Li₅FeO₄, 0.32 wt% of Li₆CoO₄, and 0.31 wt% of Li₂NiO₂ as the irreversible positive electrode additives were mixed in the manufacture of the positive electrode.

### Example 3

A positive electrode and a rechargeable lithium battery cell were manufactured substantially in the same manner as Example 1, with a difference that a positive electrode active material prepared by mixing LiNi_{0.88}Co_{0.10}Mn_{0.005}Al_{0.015}O₂ and LiNi_{0.91}Co_{0.06}Mn_{0.01}Al_{0.o2}0₂ in a weight ratio of 5:5 was used instead of the LiFePO₄ in the manufacture of the positive electrode.

### Comparative Example 1

A positive electrode and a rechargeable lithium battery cell were manufactured substantially in the same manner as Example 1, with a difference that the irreversible positive electrode additives were not used in the manufacture of the positive electrode.

### Comparative Example 2

A positive electrode and a rechargeable lithium battery cell were manufactured substantially in the same manner as Example 1, with a difference that 93.4 wt% of LiFePO₄, 3.0 wt% of a polyvinylidene fluoride binder, 1.6 wt% of a carbon nanotube conductive material, and 2.0 wt% of **Li₅FeO₄** as the irreversible positive electrode additive were used in the manufacture of the positive electrode.

### Comparative Example 3

A positive electrode and a rechargeable lithium battery cell were manufactured substantially in the same manner as Comparative Example 2, with a difference that Li₆CoO₄ was used instead of the **Li₅FeO₄** as the irreversible positive electrode additive in the manufacture of the positive electrode.

### Comparative Example 4

A positive electrode and a rechargeable lithium battery cell were manufactured substantially in the same manner as Comparative Example 2, with a difference that Li₂NiO₂ was used instead of the Li₅FeO₄ as the irreversible positive electrode additive in the manufacture of the positive electrode.

### Comparative Example 5

A positive electrode and a rechargeable lithium battery cell were manufactured substantially in the same manner as Example 1, with a difference that 93.4 wt% of LiFePO₄, 3.0 wt% of the polyvinylidene fluoride binder, 1.6 wt% of the carbon nanotube conductive material, and 1.0 wt% of **Li₅FeO₄** and 1.0 wt% of Li₆CoO₄ as the irreversible positive electrode additives were used in the manufacture of the positive electrode.

### Comparative Example 6

A positive electrode and a rechargeable lithium battery cell were manufactured substantially in the same manner as Example 1, with a difference that 93.4 wt% of LiFePO₄, 3.0 wt% of the polyvinylidene fluoride binder, 1.6 wt% of the carbon nanotube conductive material, and 1.0 wt% of **Li₅FeO₄** and 1.0 wt% of Li₂NiO₂ as the irreversible positive electrode additives were used in the manufacture of the positive electrode.

### Comparative Example 7

A positive electrode and a rechargeable lithium battery cell were manufactured substantially in the same manner as Example 1, with a difference that 93.4 wt% of LiFePO₄, 3.0 wt% of the polyvinylidene fluoride binder, 1.6 wt% of the carbon nanotube conductive material, and 1.0 wt% of Li₆CoO₄ and 1.0 wt% of Li₂NiO₂ as the irreversible positive electrode additives were used in the manufacture of the positive electrode.

The positive electrode active materials and the irreversible positive electrode additives used to prepare the positive electrodes and the rechargeable lithium battery cells according to the examples and the comparative examples are summarized in Table 1 below.

### Evaluation Example 1: Initial Charge/discharge Capacity and Efficiency

The rechargeable lithium battery cells (half-cells) according to the examples and the comparative examples were charged to an upper voltage limit of 4.2 V at a constant current of 0.2 C and to a constant voltage of 0.05 C at the constant voltage, and then discharged to a cut-off voltage of 2.5 V at 0.2 C at 25 °C. Table 1 below shows initial charge capacity, initial discharge capacity, and a ratio of the latter to the former as efficiency.

### Evaluation Example 2: High-temperature Cycle-life

After the initial charging and discharging of Evaluation Example 1, the cells were 50 cycles or more charged and discharged at 1.0 C within a voltage range of 2.5 V to 3.65 V at 45 °C to calculate a ratio of 50^{th} cycle discharge capacity to the initial discharge capacity, which is shown in Table 1 below.

**Table 1:**

| | Positive electrode active material | Irreversible additive | 0.2 C initial charge capacity (mAh/g) | 0.2 C initial discharge capacity (mAh/g) | efficiency (%) | High-temperature cycle-life (%, 45° C, 50cyc) |
|---|---|---|---|---|---|---|
| Example 1 | LiFePO₄ | Li₅FeO₄+ Li₆CoO₄+ Li₂NiO₂ | 177.9 | 152.5 | 99.7 | 101.19 |
| Example 2 | LiFePO₄ | Li₅FeO₄+ Li₆CoO₄+ Li₂NiO₂ | 169.5 | 152.0 | 99.4 | 101.04 |
| Example 3 | LiNi_{0.88}Co_{0.10}Mn_{0.00 5}Al_{0.015}O₂ and LiNi_{0.91}Co_{0.06}Mn_{0.01} Al_{0.02}O₂ | Li₅FeO₄+ Li₆CoO₄+ Li₂NiO₂ | 230.6 | 200.1 | 96.7 | 101.11 |
| Comparative Example 1 | LiFePO₄ | - | 157.7 | 145.7 | 92.4 | 98.3 |
| Comparative Example 2 | LiFePO₄ | Li₅FeO₄ | 175.5 | 152.0 | 96.6 | 101.03 |
| Comparative Example 3 | LiFePO₄ | Li₆CoO₄ | 176.0 | 152.6 | 96.7 | 101.04 |
| Comparative Example 4 | LiFePO₄ | Li₂NiO₂ | 174.7 | 151.9 | 96.9 | 101.01 |
| Comparative Example 5 | LiFePO₄ | Li₅FeO₄+ Li₆CoO₄ | 175.7 | 152.5 | 96.8 | 101.02 |
| Comparative Example 6 | LiFePO₄ | Li₅FeO₄+ Li₂NiO₂ | 175.4 | 152.3 | 96.8 | 101.02 |
| Comparative Example 7 | LiFePO₄ | Li₆CoO₄+ Li₂NiO₂ | 175.1 | 152.1 | 96.8 | 101.01 |

Referring to Table 1, compared with Comparative Examples 1 to 7, in which one or two among Li₅FeO₄, Li₆CoO₄, and Li₂NiO₂ were used as the irreversible additives, Examples 1 and 2, in which Li₅FeO₄, Li₆CoO₄, and Li₂NiO₂ were all used as the irreversible additives, exhibited desired or improved efficiency characteristics as well as equivalent initial discharge capacity and high temperature cycle-life characteristics.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the spirit and scope of the appended claims.

### Description of Symbols:

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode (10), comprising:
a current collector; and
a positive electrode active material layer on the current collector;
wherein the positive electrode active material layer comprises a positive electrode active material comprising a lithium transition metal composite compound; and
an irreversible positive electrode additive comprising at least one of a lithium iron-based oxide, a lithium cobalt-based oxide, and a lithium nickel-based oxide.

2. The positive electrode (10) as claimed in claim 1, wherein
the lithium transition metal composite compound comprises a lithium iron phosphate-based compound.

3. The positive electrode (10) as claimed in claim 1 or 2, wherein:
the lithium iron phosphate-based compound is represented by one of Chemical Formula 13 and Chemical Formula 14:
Chemical Formula 13: Liₐ₁₃Fe₍₁₋ₓ₁₃₎M¹⁴ₓ₁₃PO₄;
wherein, in Chemical Formula 13, 0.90≤a13≤1.5, 0≤x13≤0.4, and M¹⁴ comprises at least one of Al, B, Ca, Ce, Cr, Cu, La, Mg, Mn, Mo, Nb, Ni, Si, Sn, Sr, Ti, V, W, Y, Zn, Zr, and a combination thereof,
Chemical Formula 14: Liₐ₁₄Mnx₁₄Fe_{(1-x14-y14)}M¹⁵y₁₄PO₄;
wherein, in Chemical Formula 14, 0.90≤a14≤1.5, 0.1≤x14≤0.9, 0≤y13≤0.9, and M¹⁵ comprises at least one of Al, B, Ca, Ce, Cr, Cu, La, Mg, Mo, Nb, Ni, Si, Sn, Sr, Ti, V, W, Y, Zn, Zr, and a combination thereof;
whereby preferably the lithium iron phosphate-based compound comprises at least one of LiFePO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, and a combination thereof.

4. The positive electrode (10) as claimed in any of the claims 1 to 3, wherein:
the positive electrode active material comprising the lithium iron phosphate-based compound comprises one of secondary particles in which a plurality of primary particles are agglomerated, single particles, and a combination thereof;
wherein an average particle diameter (D₅₀) of the secondary particles is in a range of 5 µm to 20 µm, and
an average particle diameter (D₅₀) of the single particles is in a range of 0.5 µm to 2 µm.

5. The positive electrode (10) as claimed in any of the claims 1 to 4, wherein an amount of the secondary particles is in a range of 20 wt% to 90 wt% and an amount of the single particles is in a range of 10 wt% to 80 wt% based on 100 wt% of the positive electrode active material comprising the lithium iron phosphate-based compound.

6. The positive electrode (10) as claimed in any of the claims 1 to 5, wherein:
the secondary particles further comprise a carbon coating layer on the surface of the secondary particles and/or the surface of the primary particles forming the secondary particles, and
the singled particles further comprise a carbon coating layer on the surface of the single particles.

7. The positive electrode (10) as claimed in any of the claims 1 to 6, wherein an amount of the irreversible positive electrode additive is in a range of 0.5 wt% to 2.5 wt% based on 100 wt% of the total positive electrode active material layer.

8. The positive electrode (10) as claimed in any of the claims 1 to 7, wherein the lithium iron-based oxide comprises at least one of Li₅FeO₄, LiFeO₂, LiFe₅O₈, or a combination thereof.

9. The positive electrode (10) as claimed in any of the claims 1 to 8, wherein an amount of the lithium iron-based oxide is in a range of 0.1 wt% to 1.5 wt% based on 100 wt% of the total positive electrode active material layer.

10. The positive electrode (10) as claimed in any of the claims 1 to 9, wherein the lithium cobalt-based oxide comprises Li₆CoO₄.

11. The positive electrode (10) as claimed in any of the claims 1 to 10, wherein an amount of the lithium cobalt-based oxide is in a range of 0.1 wt% to 1.5 wt% based on 100 wt% of the total positive electrode active material layer.

12. The positive electrode (10) as claimed in any of the claims 1 to 11, wherein the lithium nickel-based oxide comprises Li₂NiO₂.

13. The positive electrode (10) as claimed in any of the claims 1 to 12, wherein an amount of the lithium nickel-based oxide is in a range of 0.1 wt% to 1.5 wt% based on 100 wt% of the total positive electrode active material layer.

14. The positive electrode (10) as claimed in any of the claims 1 to 13, wherein a density of the positive electrode active material layer is in a range of 2.0 g/cc to 3.0 g/cc and/or a loading level of the positive electrode active material layer is in a range of 10 mg/cm² to 60 mg/cm² and/or a thickness of the positive electrode active material layer is in a range of 40 µm to 300 µm.

15. A rechargeable lithium battery (100), comprising
the positive electrode (10) as claimed in any of the claims 1 to 14;
a negative electrode (20); and
an electrolyte.
